# EUROPÄISCHE PATENTSCHRIFT

(11) **EP 1 513 699 B1**
(45) Veröffentlichungstag und Bekanntmachung des Hinweises auf die Patenterteilung: **05.07.2006**
(21) Anmeldenummer: 03720543.2
(22) Anmeldetag: 30.04.2003
(51) Int. Cl.: B60K 6/04, B60L 11/18

(54) **KRAFTFAHRZEUG MIT HYBRIDANTRIEB**
MOTOR VEHICLE WITH HYBRID DRIVE
VEHICULE AUTOMOBILE A ENTRAINEMENT HYBRIDE

(30) Priorität: 20.06.2002 DE 10227530
(43) Veröffentlichungstag der Anmeldung: 16.03.2005
(73) Patentinhaber: DaimlerChrysler AG, 70567 Stuttgart (DE)
(72) Erfinder: SANCHEN, Volker, Troy, Mi, 48083 (US)
(86) Internationale Anmeldenummer: PCT/EP2003/004482
(87) Internationale Veröffentlichungsnummer: WO 2004/000597

(56) Entgegenhaltungen:
- EP-A- 1 055 545
- EP-A- 1 203 697
- EP-A- 1 286 405

## Beschreibung

Die Erfindung betrifft ein Kraftfahrzeug gemäß dem Oberbegriff von Anspruch 1.

Demgemäss betrifft die Erfindung ein Kraftfahrzeug, enthaltend eine Hybrid-Fahrantriebseinrichtung mit einem Verbrennungsmotor und mit mindestens einer elektrischen Maschine, mindestens einem elektrischen Energiespeicher, ein Brennstoffzellensystem zur Stromerzeugung und eine Steuereinrichtung, wobei die Steuereinrichtung das Brennstoffzellensystem in seinem eingeschalteten Zustand kontinuierlich in einem vorbestimmten Betriebsbereich oder Betriebspunkt guten Wirkungsgrades betreibt und wobei die Energie des Brennstoffzellensystems mindestens einem Energieaufnehmer zugeführt wird und eine gegebenenfalls anfallende Überschussenergie des Brennstoffzellensystems mindestens einem weiteren Energieaufnehmer zugeführt wird, um die für den genannten guten Wirkungsgrad erforderliche hohe Energieentnahme aus dem Brennstoffzellensystem aufrecht zu erhalten.

Aus der DE 199 13 794 A1 (= US 6 276 473) ist ein Kraftfahrzeug bekannt, das einen Verbrennungsmotor, von welchem das Kraftfahrzeug sofort nach dem Starten des elektrischen Bordnetzes antreibbar ist, und einen Elektromotor als Hauptantriebsmotor, zu dessen Energieversorgung ein Brennstoffzellensystem vorgesehen ist, enthält. Das Kraftfahrzeug wird von dem Elektromotor anstatt vom Verbrennungsmotor angetrieben, sobald das Brennstoffzellensystem durch Erwärmung von den Abgasen des Verbrennungsmotors Betriebstemperatur erreicht hat. Nachdem das Brennstoffzellensystem Betriebstemperatur erreicht hat, kann das Kraftfahrzeug von dem Elektromotor und/oder von dem Verbrennungsmotor angetrieben werden. Mit der von dem Brennstoffzellensystem erzeugten Energie können auch Nebenaggregate des Kraftfahrzeuges und Aggregate des Brennstoffzellensystems mit Strom versorgt werden, welche zum Betrieb der mindestens einen Brennstoffzelle des Brennstoffzellensystems erforderlich sind.

Aus der WO 98/40922 ist ein Kraftfahrzeug mit einem Hybrid-Energieerzeugungssystem bekannt, welches ein Brennstoffzellensystem und einen Verbrennungsmotor enthält. Kohlenwasserstoff-Brennstoff wird zunächst in einem Pyrolyse-Reaktor in einen Wasserstoff enthaltenden Brennstoffanteil und einen Rest-Brennstoff aufgespalten. Mit dem Wasserstoff enthaltenden Anteil wird die mindestens eine Brennstoffzelle des Brennstoffzellensystems betrieben, welches elektrische Energie für einen Elektromotor liefert. Der Rest-Brennstoff kann als Treibstoff für den Verbrennungsmotor verwendet werden. Das Brennstoffzellensystem ist so ausgelegt, dass es etwa 50% der von dem Hybridfahrzeug maximal bereitstellbaren Energie liefern kann. In einem Bereich niedriger Last stellt das Brennstoffzellensystem die gesamte oder einen großen Teil der benötigten Energie bereit. Bei höherer Last wird zusätzlich der Verbrennungsmotor betrieben. Der Verbrennungsmotor kann direkt zum Antrieb von Fahrzeugrädern oder zum Antrieb eines elektrischen Generators, welcher Strom für einen einzigen Elektromotor erzeugt, verwendet werden.

In der EP 1 203 697 ist ein Hybridfahrzeug mit einem Verbrennungsmotor, einem Brennstoffzellensystem und einer Batterie als Energiespeicher beschrieben, wobei das Brennstoffzellensystem zur Versorgung der elektrischen Verbraucher an Bord des Fahrzeugs eingesetzt wird.

Die gattungsgemäße WO 01/89015 offenbart ein Hybridfahrzeug mit Brennstoffzellensystem und einer Batterie, die als Puffer für anfallende Überschussenergie verwendet wird. Das Brennstoffzellensystem wird in einer Zone maximaler Effizienz betrieben und der Betriebspunkt wird mittels eines Fahrleistungsbedarfs und eines Ladezustands der Batterie bestimmt.

Durch die Erfindung soll die Aufgabe gelöst werden, den Energieverbrauch eines Kraftfahrzeuges unter Verwendung eines Brennstoffzellensystems zu senken. Diese Aufgabe wird gemäß der Erfindung durch ein Kraftfahrzeug mit den Merkmalen von Anspruch 1 gelöst.

Demgemäss wird die Erfindung dadurch gelöst, dass das Brennstoffzellensystem als Hilfsenergiequelle für die Abgabe einer kleineren Leistung als der Verbrennungsmotor ausgebildet ist und dass das Brennstoffzellensystem bezüglich seiner maximalen Leistung nur für den maximalen Leistungsbedarf von einem Bordnetz und von mindestens einem Nebenaggregat ausgebildet ist, welches keine Fahrantriebsleistung abgibt.

Das Brennstoff zellensystem bildet daher eine Hilfs-Energie-Einheit (auxiliary power unit). Weitere Merkmale der Erfindung sind in den Unteransprüchen enthalten.

Die Erfindung wird im folgenden mit Bezug auf die Zeichnungen anhand von bevorzugten Ausführungsformen als Beispiele beschrieben. In den Zeichnungen zeigen
Fig. 1 ein Kraftfahrzeug nach der Erfindung mit Parallel-Hybrid-Antrieb,
Fig. 2 schematisch eine weitere Ausführungsform eines Kraftfahrzeuges nach der Erfindung mit einem Seriell-HybridAntrieb,
Fig. 3 ein Diagramm, welches den funktionalen Zusammenhang zwischen Wirkungsgrad und abgegebener Leistung des Brennstoffzellensystems zeigt.

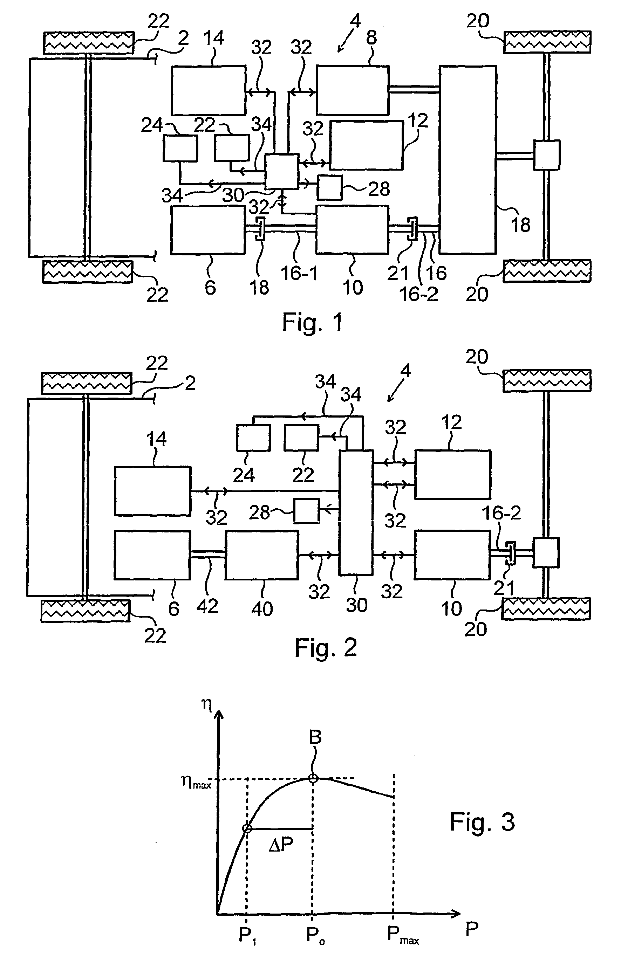

Das in Fig. 1 dargestellte Kraftfahrzeug 2 enthält eine Parallel-Hybrid-Fahrantriebseinrichtung 4 mit einem Verbrennungsmotor 6 und mindestens einer elektrischen Maschine 8 und/oder 10. Ferner ist mindestens ein Energiespeicher 12 zur Speicherung von elektrischer Energie und ein Brennstoffzellensystem 14 zur Erzeugung von elektrischer Energie und vorzugsweise auch zur Erzeugung von nutzbarer Wärmeenergie vorgesehen. Der Energiespeicher 12 kann beispielsweise eine Batterie oder ein Kondensator sein.

Der Verbrennungsmotor 6 ist über einen Antriebsstrang 16 mit einem Fahrantriebsgetriebe 18 verbunden und kann durch dieses Fahrzeugräder 20 antreiben. Weitere Fahrzeugräder 22 können auf die gleiche Weise antreibbar sein oder nicht angetriebene Räder sein.

Im Antriebsstrang 16 befindet sich die zweite elektrische Maschine 10. Wenn sie als Elektromotor betrieben wird, kann sie zusätzlich oder anstelle des Verbrennungsmotors über das Fahrantriebsgetriebe 18 die Fahrzeugräder 20 antreiben. Vorzugsweise befinden sich in mindestens einem der beiden Strangabschnitte 16-1 und/oder 16-2 zwischen der zweiten elektrischen Maschine 10 und dem Verbrennungsmotor 6 und/oder dieser zweiten elektrischen Maschine 10 und dem Fahrantriebsgetriebe 18 eine schaltbare erste Kupplung 18 bzw. eine schaltbare zweite Kupplung 21. Bei geöffneter erster Kupplung 18 und gleichzeitig geschlossener zweiter Kupplung 21 kann die zweite elektrische Maschine 10, a) ohne den Verbrennungsmotor 6 mitzuschleppen, als Elektromotor Strom von dem Energiespeicher 12 und/oder von dem Brennstoffzellensystem beziehen und Antriebsdrehmoment auf die Fahrzeugräder 20 übertragen, oder b) als elektrischer Generator, welcher von den Fahrzeugrädern 20 angetrieben wird, elektrischen Storm erzeugen, welcher in dem Energiespeicher 12 gespeichert und/oder auf Hilfsaggregate 22 und/oder 24 übertragbar ist, oder c) als elektromagnetische Fahrzeugbremse betrieben werden. Bei geöffneter zweiter Kupplung 21 und gleichzeitig geschlossener erster Kupplung 18 kann die zweite elektrische Maschine 10 a) vom Verbrennungsmotor 6 angetrieben werden und dabei als Generator elektrischen Strom erzeugen, welcher in dem Energiespeicher 12 speicherbar und/oder den Nebenaggregaten 22 und 24 zuführbar ist, oder b) als Starter zum Starten des Verbrennungsmotors 6 verwendet werden.

Die erste elektrische Maschine 8 kann als Elektromotor elektrischen Strom aus dem Energiespeicher 12 und/oder aus dem Brennstoffzellensystem 14 beziehen und über das Fahrantriebsgetriebe 18 Drehmoment auf die Fahrzeugräder 20 übertragen, entweder allein oder zusammen mit der als Elektromotor betriebenen zweiten elektrischen Maschine 10 und/oder zusammen mit dem Verbrennungsmotor 6. Ferner kann die erste elektrische Maschine 8 von den Fahrzeugrädern 20 angetrieben werden und dadurch elektrischen Strom erzeugen, welcher in dem Energiespeicher 12 speicherbar und/oder den Nebenaggregaten 22, 24 und/oder Hilfsaggregaten des Brennstoffzellensystems 14 zuführbar ist, welche zum Betrieb von deren mindestens einen Brennstoffzelle erforderlich sind, beispielsweise Verdichter, Heizungs- oder Klimatisiereinrichtung, Kühlgebläse, Ventile.

Die Stromverteilung auf die verschiedenen Elemente erfolgt durch eine elektronische Steuereinrichtung 30 eines Bordnetzes 28. Nach dem Einschalten des elektrischen Bordnetzes und damit auch der Steuereinrichtung 30 kann das Kraftfahrzeug 2 sofort mit dem Verbrennungsmotor 6 starten. Die dabei entstehende Wärme des Verbrennungsmotors, beispielsweise von dessen Abgasen, kann zum Aufwärmen des Brennstoffzellensystems 14 auf Betriebstemperatur verwendet werden. Stattdessen oder zusätzlich kann eine Heizvorrichtung zum Erwärmen des Brennstoffzellensystems 14 vorgesehen sein. Nachdem das Brennstoffzellensystem 14 Betriebstemperatur erreicht hat, kann dessen elektrische Energie allein oder zusätzlich zur mechanischen Energie des Verbrennungsmotors 6 zum Antrieb des Kraftfahrzeuges 2 verwendet werden.

Auf den elektrischen Verbindungswegen zwischen den einzelnen Teilen angegebene Doppelpfeile 32 und Einzelpfeile 34 in den Zeichnungen geben die elektrische Stromflussrichtung an. Die Doppelpfeile 32 zeigen an, dass der Strom entweder in der einen oder in der anderen Richtung fließen kann, je nach dem, ob den betreffenden Teilen Strom entnommen oder zugeführt wird.

Gemäß der Erfindung ist das Brennstoffzellensystem 14 als Hilfsenergiequelle für die Abgabe einer kleineren Leistung als der Verbrennungsmotor 6 ausgebildet und durch die Steuereinrichtung 30 ist das Brennstoffzellensystem 14 bei eingeschaltetem Bordnetz kontinuierlich in einem vorbestimmten Betriebsbereich oder Betriebspunkt guten Wirkungsgrades betreibbar, wobei die abgebbare Energie des Brennstoffzellensystems mindestens einem vorbestimmten der Energieaufnehmer "elektrische Maschine 8, 10, Energiespeicher 12, und/oder Nebenaggregate 22, 24, Bordnetz 28 und Steuereinrichtung 30" zuführbar ist und eine gegebenenfalls anfallende Überschussenergie des Brennstoffzellensystems 14 mindestens einem weiteren von diesen Energieaufnehmern zuführbar ist, in Abhängigkeit von vorbestimmten Betriebskriterien wie beispielsweise von dem Ladezustand des elektrischen Energiespeichers 12 und dem momentanen Leistungsbedarf der anderen Energieaufnehmer.

Gemäß einer bevorzugten Ausführungsform der Erfindung ist das Brennstoffzellensystem 14 nur für den maximalen Leistungsbedarf des Bordnetzes 28 und von mindestens einem der Nebenaggregate 22, 24 ausgebildet. Die Nebenaggregate 22, 24 dienen nicht zur Abgabe von Fahrantriebsleistung, sondern zu anderen Zwecken, beispielsweise zum Betrieb einer Klimaanlage, Innenraumheizung, Sitzheizung, Zigarettenanzünder, Radio, Fernseher, Navigationssystem, Datenverarbeitungsanlage, Kühlbox oder Kühlschrank, Fensteröffner, Türöffner, Schiebedach- oder Faltdachöffner, Kofferraumöffner, Fahrzeuglenkung, Fahrzeugbremsanlage, Fahrzeuginnenbeleuchtung, Fahrzeugaußenbeleuchtung, Telekommunikationssysteme, Kompressor, Ölpumpe, Wasserpumpe und/oder Benzinpumpe und/oder ein Arbeitsgerät, insbesondere eine Seilwinde, Fahrzeughubstütze und/oder Straßenkehrbürste.

Gemäß bevorzugter Ausführungsform der Erfindung ist der maximale Wirkungsgrad des Brennstoffzellensystems 14 in dem vorbestimmten Betriebsbereich oder in dem vorbestimmten Betriebspunkt.

In Fig. 2 sind Fig. 1 entsprechende Teile mit gleichen Bezugszahlen versehen. Ein Generator 40 ist zur Erzeugung von elektrischem Strom mit einem Verbrennungsmotor 6 durch eine Antriebsverbindung 42 antriebsmäßig verbunden oder verbindbar und über eine elektrische oder elektronische Steuereinrichtung 30 des Bordnetzes 28 mit dem elektrischen Energiespeicher 12 und/oder einer elektrischen Maschine 10 elektrisch verbunden oder verbindbar. Die elektrische Maschine 10 ist entweder direkt oder vorzugsweise über die Steuereinrichtung 30 mit dem Generator 40 oder mit dem elektrischen Energiespeicher 12 (z. B. eine Batterie oder ein Kondensator) elektrisch verbunden oder verbindbar. Die elektrische Maschine 10 ist über einen Antriebsstrangabschnitt 16-2 mit Fahrzeugrädern 20 antriebsmäßig verbunden oder durch eine schaltbare Kupplung 21 verbindbar. Der Antriebsstrangabschnitt 16-2 kann ein Getriebe enthalten.

Der Generator 40 ist vorzugsweise auch als Elektromotor zum Starten des Verbrennungsmotors 6 betreibbar.

Wenn die elektrische Maschine 10 von dem Energiespeicher 12 oder dem Generator 40 mit elektrischem Strom versorgt wird, wirkt sie als elektrischer Fahrantriebsmotor zum Antrieb des Kraftfahrzeuges. Ferner kann diese elektrische Maschine 10, wenn sie bei rollendem Fahrzeug von den Fahrzeugrädern 20 angetrieben wird, als Generator arbeiten und dabei Strom in den Energiespeicher 12 abgeben. Ferner besteht auch die Möglichkeit, die elektrische Maschine 10 als elektrische Fahrzeugbremse mit Strom zu versorgen.

Ein Brennstoffzellensystem 14 ist entweder direkt oder vorzugsweise durch die elektrische Steuereinrichtung 30 mit dem elektrischen Energiespeicher 12 verbunden oder verbindbar. Zum Starten des Brennstoffzellensystems 14 bezieht es elektrischen Strom aus dem Energiespeicher 12. Nachdem das Brennstoffzellensystem 14 Betriebszustand erreicht hat, beispielsweise die für interne Stoffumsetzungen erforderliche Betriebstemperatur erreicht hat, kann es selbst Strom erzeugen, welcher in dem Energiespeicher 12 speicherbar ist. Ferner kann auch eine elektrische Verbindung des Brennstoffzellensystems mit der elektrischen Seite der elektrischen Maschine 10 und/oder mit der elektrischen Seite des Generators 40 vorgesehen werden, vorzugsweise über die Steuereinrichtung 30, um das Brennstoffzellensystem 14, um es zu starten, mit elektrischer Energie zu versorgen, oder um die elektrische Maschine 10 mit elektrischer Energie aus dem Brennstoffzellensystem 14 zu versorgen.

Wie bei Fig. 1 so ist auch bei Fig. 2 der Verbrennungsmotor 6 der Hauptenergieerzeuger für den Fahrantrieb des Kraftfahrzeuges. Das Brennstoffzellensystem 14 ist als Hilfsenergiequelle für die Abgabe einer kleineren Leistung als der Verbrennungsmotor 6 ausgebildet. Durch die Steuereinrichtung 30 wird das Brennstoffzellensystem 14, wenn es eingeschaltet ist, kontinuierlich in einem vorbestimmten Betriebsbereich oder Betriebspunkt guten Wirkungsgrades betrieben, wobei die abgebbare Energie des Brennstoffzellensystems einem oder mehreren vorbestimmten der Energieaufnehmer zuführbar ist und eine gegebenenfalls anfallende Überschussenergie des Brennstoffzellensystems 14 mindestens einem weiteren von diesen Energieaufnehmern zuführbar ist, abhängig von deren Energiebedarf, um die für einen guten Wirkungsgrad erforderliche hohe Energieentnahme aus dem Brennstoffzellensystem 14 aufrecht zu erhalten.

Die von dem Brennstoffzellensystem 14 zuviel erzeugte Energie wird vorzugsweise für den Fahrantrieb benutzt oder im Energiespeicher 12 gespeichert. Der maximale Wirkungsgrad des Brennstoffzellensystems 14 liegt vorzugsweise in dem vorbestimmten Betriebsbereich oder in dem vorbestimmten Betriebspunkt. Auch in Fig. 2 können ähnlich wie in Fig. 1 Nebenaggregate 22 und/oder 24 vorgesehen sein.

Die Überschussenergie des Brennstoffzellensystems 14 kann in Fig. 2 ähnlich wie in Fig. 1 entweder vollständig oder teilweise dem Energiespeicher 12 oder der elektrischen Maschine 10 bei dessen Betrieb als elektrischer Fahrantriebsmotor zugeführt werden, in Abhängigkeit von Betriebskriterien. Solche Betriebskriterien sind beispielsweise die Ladekapazität des Energiespeichers 12 und dessen momentaner Ladezustand, und der momentane Energiebedarf der elektrischen Maschine 10. Daraus ist ersichtlich, dass die elektrische Energie des Brennstoffzellensystems 14 entweder nur dem Energiespeicher 12 zuführbar sein kann oder gemäß anderer Ausführungsform gleichzeitig oder alternativ auch der elektrischen Maschine 10.

Gemäß einer bevorzugten Ausführungsform ist das Brennstoffzellensystem 14 bezüglich seiner maximal abgebbaren Leistung nur für den maximalen Leistungsbedarf des Bordnetzes und/oder von mindestens einem der Nebenaggregate oder von allen Nebenaggregaten 22, 24 ausgebildet, welche nicht zur Abgabe von Fahrantriebsleistung vorgesehen sind.

Das Brennstoffzellensystem 14 dient somit nur als Hilfsenergieeinheit (Auxiliary Power Unit), während die Haupt-Fahrenergiequelle der Verbrennungsmotor 6 ist. Das Brennstoffzellensystem 14 hat seinen besten Wirkungsgrad, wenn an ihn ein Verbraucher angeschlossen ist, welcher dem Brennstoffzellensystem 14 dessen maximal erzeugbare Leistung entnimmt.

Das Brennstoffzellensystem 14 ist bei Fig. 1 und Fig. 2 derart ausgebildet, dass es eine Standversorgung (Stillstand des Kraftfahrzeuges und/oder Stillstand des Verbrennungsmotors 6) ermöglicht. Das Brennstoffzellensystem 14 erzeugt bei Fahrzeugstillstand, insbesondere bei Stillstand des Verbrennungsmotors, beim Betrieb der wichtigsten Nebenaggregate 22 und/oder 24, ausreichend Strom für die Aufrechterhaltung eines Mindestladezustandes des Energiespeichers 12 und für ein erneutes Starten des Brennstoffzellensystems 14 sowie für das Starten des Verbrennungsmotors 6.

Die Erfindung wird im folgenden mit Bezug auf Fig. 3 näher beschrieben. Sie zeigt den Wirkungsgrad η des Brennstoffzellensystems 14 in Abhängigkeit von dessen erzeugten Leistung "P" für alle Ausführungsformen der Erfindung.

Das Brennstoffzellensystem 14 hat seinen besten, d. h. maximalen Wirkungsgrad ηₘₐₓ bei einem systembedingten optimalen E-nergieabgabewert. Dies erfordert einen Optimal-Energiebedarf P₀ des mindestens einen an das Brennstoffzellensystem 14 angeschlossenen Energieaufnehmers. Damit ergibt sich ein optimaler Betriebspunkt "B". Das Brennstoffzellensystem 14 ist auf den Maximalbedarf Pₘₐₓ des Bordnetzes und der Nebenaggregate 22, 24 ausgelegt. Das Brennstoffzellensystem 14 läuft gemäß der Erfindung sowohl bei dem Optimal-Energiebedarf P₀ als auch bei einem Energie-Minderbedarf P₁ in dem Optimal-Betriebspunkt "B", bei welchem der maximale Wirkungsgrad ηₘₐₓ gegeben ist, oder in einem Betriebsbereich, welcher dem Optimal-Betriebspunkt "B" angenähert ist oder diesen enthält. Dies wird dadurch erreicht, dass bei einem Minderbedarf P₁ die zuviel erzeugte Überschussleistung ΔP (Differenz zwischen dem Energie-Minderbedarf P₁ und dem Optimal-Energiebedarf P₀ bei maximalem Wirkungsgrad ηₘₐₓ) an mindestens eine der elektrischen Maschinen 8 und 10 für den Fahrantrieb oder in den Energiespeicher 12 abgegeben wird. Die optimale Energie bzw. Leistung P₀, bei welcher der maximale Wirkungsgrad ηₘₐₓ systembedingt gegeben, beträgt beispielsweise für einen Personenkraftwagen 2,5 kW. Der Wert kann je nach Art des Fahrzeuges beispielsweise zwischen 1,5 kW und 5,0 kW liegen. Bei einer optimalen Leistung (Optimal-Energiebedarf) P₀ von 2,5 kW und einem Minderbedarf P₁ von 0,6 kW ergibt sich eine Überschussleistung von 1,9 kW, die für den Fahrantrieb direkt verwendbar ist oder in dem Energiespeicher 12 zwischenspeicherbar ist.

Auf diese Weise wird vermieden, dass das Brennstoffzellensystem 14 in einem Betriebsbereich mit niedrigem Wirkungsgrad betrieben wird. Falls der optimale Betriebspunkt "B" nicht in den Bereich des maximalen Wirkungsgrades ηₘₐₓ gelegt werden kann, wird er vorzugsweise eher in Richtung zum maximalen Leistungsbedarf Pₘₐₓ hin verlegt als in Richtung zum Minderbedarf P₁, weil die Wirkungsgradkurve ausgehend vom maximalen Wirkungsgrad ηₘₐₓ nach unten wesentlich steiler abfällt als nach oben.

Das Brennstoffzellensystem 14 ist nur für eine so große Leistung ausgebildet, dass eine Grundversorgung für den Mindestbetrieb des Kraftfahrzeuges sichergestellt ist, beispielsweise für das Starten des Verbrennungsmotors und für das Starten des Brennstoffzellensystems sowie die für den Betrieb des Kraftfahrzeuges notwendige Lichtanlage. Vorzugsweise dient jedoch die Grundversorgung des Brennstoffzellensystems 14 auch zur Energieversorgung für Bordeinrichtungen wie beispielsweise eine Klimaanlage und/oder vorstehend genannte Nebenaggregate.

Durch die Erfindung ergeben sich beispielsweise folgende Vorteile:
Hohe Energieeinsparung; hoher Gesamt-Wirkungsgrad des Kraftfahrzeuges durch Brennstoffzellen-Stromversorgung und Stromrekuperation durch Betrieb einer oder mehrerer elektrischer Maschinen als Generator, welche vom rollenden Kraftfahrzeug und/oder vom Verbrennungsmotor antreibbar sind; Energieversorgung bei Fahrzeugstillstand, insbesondere bei ausgeschaltetem Verbrennungsmotor, was besonders geräuscharm, effektiv und umweltschonend ist; Entlastung des Energiespeichers 12, womit dieser eine höhere Lebensdauer hat; es ist auch ein rein elektrischer Fahrzeugantrieb dauerhaft möglich, solange nur kleine Leistungen gefordert werden; alle bekannten Vorteile eines Hybridantriebes bleiben erhalten.

## Patentansprüche

1. Kraftfahrzeug enthaltend eine Hybrid-Fahrantriebseinrichtung (4) mit einem Verbrennungsmotor (6) und mit mindestens einer elektrischen Maschine (8, 10), mindestens einen elektrischen Energiespeicher (12), ein Brennstoffzellensystem (14) zur Stromerzeugung und eine Steuereinrichtung (30), wobei die Steuereinrichtung (30) das Brennstoffzellensystem (14) in seinem eingeschalteten Zustand kontinuierlich in einem vorbestimmten Betriebsbereich oder Betriebspunkt guten Wirkungsgrades betreibt und wobei die Energie des Brennstoffzellensystems (14) mindestens einem Energieaufnehmer (8, 10, 12, 22, 24, 30) zugeführt wird und eine gegebenenfalls anfallende Überschussenergie des Brennstoffzellensystems (14) mindestens einem weiteren Energieaufnehmer (8, 10, 12, 22, 24, 30) zuführt wird, um die für den genannten guten Wirkungsgrad erforderliche hohe Energieentnahme aus dem Brennstoffzellensystem (14) aufrecht zu erhalten,
**dadurch gekennzeichnet,**
**dass** das Brennstoffzellensystem (14) als Hilfsenergiequelle für die Abgabe einer kleineren Leistung als der Verbrennungsmotor (6) ausgebildet ist und dass das Brennstoffzellensystem (14) bezüglich seiner maximalen Leistung nur für den maximalen Leistungsbedarf von einem Bordnetz und von mindestens einem Nebenaggregat (22, 24) ausgebildet ist, welches keine Fahrantriebsleistung abgibt.

2. Kraftfahrzeug nach Anspruch 1,
**dadurch gekennzeichnet,**
**dass** die Überschussenergie des Brennstoffzellensystems (14) mindestens teilweise in einen des mindestens einen Energiespeichers (12) gespeist wird, so dass dieser als der weitere Energieaufnehmer dient.

3. Kraftfahrzeug nach Anspruch 1 oder 2,
**dadurch gekennzeichnet,**
**dass** die Überschussenergie mindestens teilweise der mindestens einen elektrischen Maschine (8, 10) als Fahrantriebsleistung zugeführt wird, so dass diese als der weitere Energieaufnehmer dient.

4. Kraftfahrzeug nach Anspruch 1,
**dadurch gekennzeichnet,**
**dass** mindestens ein Teil der Überschussenergie des Brennstoffzellensystems (14) in Abhängigkeit von mindestens einem Betriebskriterium mindestens teilweise der mindestens einen elektrischen Maschine (8, 10) und/oder dem mindestens einen Energiespeicher (12) zugeführt wird, so dass diese als die weiteren Energieaufnehmer dienen.

5. Kraftfahrzeug nach Anspruch 4,
**dadurch gekennzeichnet,**
**dass** mindestens eines der folgenden Betriebskriterien vorgesehen ist: Fahrantriebs-Leistungsbedarf des Kraftfahrzeuges, Ladezustand und maximale Ladekapazität des mindestens einen elektrischen Energiespeichers.

6. Kraftfahrzeug nach mindestens einem der vorhergehenden Ansprüche,
**dadurch gekennzeichnet,**
**dass** mindestens eines der folgenden Nebenaggregate vorgesehen ist: Klimaanlage, Innenraumheizung, Sitzheizung, Zigarettenanzünder, Radio, Fernseher, Navigationssystem, Datenverarbeitungsanlage, Kühlbox oder Kühlschrank, Fensteröffner, Türöffner, Schiebedach- oder Faltdachöffner, Kofferraumöffner, Fahrzeuglenkung, Fahrzeugbremsanlage, Fahrzeuginnenbeleuchtung, Fahrzeugaußenbeleuchtung, Telekommunikationssystem, Kompressor, Ölpumpe, Wasserpumpe, Benzinpumpe, ein Arbeitsgerät, insbesondere Seilwinde, Fahrzeughubstütze, Straßenkehrbürste.

7. Kraftfahrzeug nach mindestens einem der vorhergehenden Ansprüche,
**dadurch gekennzeichnet,**
**dass** der vorbestimmte Betriebsbereich oder der vorbestimmte Betriebspunkt bei oder nahe bei dem maximalen Wirkungsgrad ηₘₐₓ des Brennstoffzellensystems (14) liegt.

## Claims

1. Motor vehicle comprising a hybrid traction drive device (4) with an internal combustion engine (6) and at least one electrical machine (8, 10), at least one electrical energy store (12), a fuel cell system (14) for generating power, and a control device (30), with the control device (30) continuously operating the fuel cell system (14) in its switched-on state in a predetermined operating range or at a predetermined operating point with a high degree of efficiency, and with the energy in the fuel cell system (14) being supplied at least to an energy consumer (8, 10, 12, 22, 24, 30) and any excess energy which may be produced in the fuel cell system (14) being supplied at least to a further energy consumer (8, 10, 12, 22, 24, 30) in order to maintain the high level of energy withdrawal from the fuel cell system (14) which is required for the said high degree of efficiency,
**characterized**
**in that** the fuel cell system (14) is in the form of an auxiliary energy source for outputting a lower power than the internal combustion engine (6), and in that the maximum power of the fuel cell system (14) is designed only for the maximum power requirement of an on-board electrical system and of at least one additional assembly (22, 24) which does not output any traction drive power.

2. Motor vehicle according to Claim 1,
**characterized**
**in that** at least some of the excess energy in the fuel cell system (14) is fed to one of the at least one energy stores (12), so that the said energy store serves as the further energy consumer.

3. Motor vehicle according to Claim 1 or 2,
**characterized**
**in that** at least some of the excess energy is supplied to the at least one electrical machine (8, 10) as traction drive power, so that the said electrical machine serves as the further energy consumer.

4. Motor vehicle according to Claim 1,
**characterized**
**in that** at least some of the excess energy in the fuel cell system (14) is supplied to the at least one electrical machine (8, 10) and/or to the at least one energy store (12) as a function of at least one operating criterion, so that the said electrical machine and energy store serve as the further energy consumers.

5. Motor vehicle according to Claim 4,
**characterized**
**in that** at least one of the following operating criteria is provided: traction drive power requirement of the motor vehicle, charge state and maximum charge capacity of the at least one electrical energy store.

6. Motor vehicle according to at least one of the preceding claims,
**characterized**
**in that** at least one of the following additional assemblies is provided: air-conditioning system, interior heater, seat heater, cigarette lighter, radio, television, navigation system, data-processing system, cooler or refrigerator, window opener, door opener, sliding-roof or folding-roof opener, boot opener, vehicle steering means, vehicle braking system, interior vehicle lights, exterior vehicle lights, telecommunications system, compressor, oil pump, water pump, petrol pump, a working device, in particular a winch, a vehicle lifting support or a street-sweeping brush.

7. Motor vehicle according to at least one of the preceding claims,
**characterized**
**in that** the predetermined operating range or the predetermined operating point is at or close to the maximum degree of efficiency ηₘₐₓ of the fuel cell system (14).

## Revendications

1. Véhicule automobile qui présente pour l'entraînement du véhicule un dispositif hybride (4) doté d'un moteur à combustion interne (6) et d'au moins une machine électrique (8, 10), d'au moins un accumulateur (12) d'énergie électrique, d'un système (14) à cellules à combustible pour la création de courant et d'un dispositif de commande (30), dans lequel, lorsque le système (14) à cellules à combustible est branché, le dispositif de commande (30) le fait fonctionner en continu dans une plage prédéterminée de fonctionnement ou un point de fonctionnement qui présentent un bon rendement, l'énergie du système (14) à cellules à combustible étant amenée au moins à un consommateur d'énergie (8, 10, 12, 22, 24, 30) et l'énergie éventuellement en excès du système (14) à cellules à combustible étant apportée à au moins un autre consommateur d'énergie (8, 10, 12, 22, 24, 30) pour maintenir la forte consommation d'énergie du système (14) à cellules à combustible nécessaire pour obtenir ledit bon rendement,
**caractérisé en ce que**
le système (14) à cellules à combustible est configuré comme source d'énergie auxiliaire qui délivre une puissance plus faible que le moteur à combustion interne (6) et **en ce que** la puissance maximale du système (14) à cellules à combustible n'est prévue que pour les besoins maximum en énergie du tableau de bord et d'au moins un système secondaire (22, 24) qui ne fournit pas la puissance d'entraînement nécessaire au déplacement.

2. Véhicule automobile selon la revendication 1, **caractérisé en ce que** l'énergie en excès du système (14) à cellules à combustible est conservée au moins en partie dans l'un des accumulateurs d'énergie (12) de telle sorte que ce ou ces derniers représentent les autres consommateurs d'énergie.

3. Véhicule automobile selon les revendications 1 ou 2, **caractérisé en ce que** l'énergie est apportée au moins en partie à la ou aux machines électriques (8, 10) comme puissance d'entraînement de déplacement, de telle sorte que cette ou ces machines représentent les autres consommateurs d'énergie.

4. Véhicule automobile selon la revendication 1, **caractérisé en ce qu'**au moins une partie de l'énergie en excès du système (14) à cellules à combustible est apportée en fonction d'au moins un critère de fonctionnement à au moins une machine électrique (8, 10) et/ou à au moins un accumulateur d'énergie (12) de telle sorte que ce ou ces derniers représentent les autres consommateurs d'énergie.

5. Véhicule automobile selon la revendication 4, **caractérisé en ce qu'**au moins l'un des critères de fonctionnement suivants est prévu : puissance d'entraînement pour le déplacement du véhicule automobile, état de charge et capacité maximale de charge du ou des accumulateurs électriques.

6. Véhicule automobile selon au moins l'une des revendications précédentes, **caractérisé en ce qu'**au moins l'un des systèmes secondaires suivants est prévu : installation de climatisation, chauffage de l'habitacle, chauffage des sièges, allume-cigare, radio, télévision, système de navigation, installation de traitement de données, compartiment frigorifique ou armoire frigorifique, ouvre-fenêtre, ouvre-porte, système d'ouverture d'un toit coulissant ou d'une capote repliable, système d'ouverture du coffre, direction assistée du véhicule, installation de freinage du véhicule, éclairage intérieur du véhicule, éclairage extérieur du véhicule, système de télécommunication, compresseur, pompe à huile, pompe à eau, pompe à essence, appareil de travail et en particulier treuil pour câble, cric de levage du véhicule ou brosse de balayage de la voirie.

7. Véhicule automobile selon au moins l'une des revendications précédentes, **caractérisé en ce que** la plage prédéterminée de fonctionnement ou le point de fonctionnement prédéterminé sont situés au rendement maximum ηₘₐₓ du système (14) à cellules à combustible ou à proximité de ce rendement maximum.
